(19) Europäisches Patentamt
European Patent Office
Office européen des brevets

(11) **EP 1 831 652 B1**

(12) **FASCICULE DE BREVET EUROPEEN**

(45) Date de publication et mention
de la délivrance du brevet:
**05.06.2013 Bulletin 2013/23**

(51) Int Cl.:
***G01F 23/26*** *(2006.01)*

(21) Numéro de dépôt: **05821694.6**

(22) Date de dépôt: **20.12.2005**

(86) Numéro de dépôt international:
**PCT/EP2005/056968**

(87) Numéro de publication internationale:
**WO 2006/067149 (29.06.2006 Gazette 2006/26)**

(54) **CAPTEUR CAPACITIF DE NIVEAU D'UN LIQUIDE ET METHODE D'ESTIMATION DU NIVEAU**

KAPAZITIVER FÜLLSTANDSSENSOR UND VERFAHREN ZUR FÜLLSTANDSSCHÄTZUNG

LIQUID LEVEL SENSOR AND METHOD OF ESTIMATION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.12.2004 EP 04106868**

(43) Date de publication de la demande:
**12.09.2007 Bulletin 2007/37**

(73) Titulaire: **Inergy Automotive Systems Research (Société Anonyme)**
**1120 Bruxelles (BE)**

(72) Inventeurs:
• **BARLESI, Lorenzo**
  **B-6000 Charleroi (BE)**
• **CHIAFFI, Michel**
  **F-60600 Breuil Le Vert (FR)**
• **NAYDENOV, Volodia**
  **B-1348 Louvain-La-Neuve (BE)**

(74) Mandataire: **de la Bigne, Guillaume Michel Marie et al**
**Cabinet Lhermet La Bigne & Remy**
**11, boulevard de Sébastopol**
**75001 Paris (FR)**

(56) Documents cités:
**WO-A-01/02817        WO-A-98/57132**
**US-A- 3 801 902        US-A- 5 175 505**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 1 831 652 B1**

**Description**

**Domaine de l'invention**

L'invention se rapporte à un capteur capacitif de niveau d'un liquide d'un réservoir, incluant un condensateur de mesure, destiné à être disposé dans le réservoir; un condensateur de référence, destiné à être disposé dans le réservoir dans une partie basse de celui-ci; un condensateur étalon, de capacité supérieure à celle du condensateur de mesure; des moyens de contrôle, aptes à fournir un signal d'estimation du niveau du liquide; un amplificateur opérationnel; un condensateur d'intégration, connecté entre l'entrée inverseuse de l'amplificateur et sa sortie; et un comparateur, destiné à comparer la tension de sortie de l'amplificateur à une tension de seuil et à fournir un signal de comparaison aux moyens de contrôle.

L'invention se rapporte également à une méthode d'estimation du niveau d'un liquide dans un réservoir par mesure capacitive, et à l'utilisation d'un tel capteur capacitif de niveau pour un réservoir d'un véhicule.

**État de la technique**

On connaît de tels capteurs dans l'état de la technique.

La demande de brevet français FR 2 795 816 A1 par exemple divulgue un tel capteur. Cette demande divulgue un détecteur de niveau d'un liquide dans un réservoir, comprenant un condensateur de mesure destiné à être placé sur toute la hauteur du réservoir et adapté pour que sa capacité varie avec le niveau de liquide dans le réservoir et un condensateur de référence destiné à être disposé au fond du réservoir.

En outre, les condensateurs sont raccordés à un circuit électronique d'interprétation, comportant un microcontrôleur incorporant des moyens logiciels pour provoquer périodiquement la charge, par quantités discrètes, d'un intégrateur à partir d'une capacité à mesurer, puis la décharge de cet intégrateur à partir d'une capacité étalon placée dans le circuit, capacité étalon supérieure à toutes les capacités à mesurer. Un comparateur permet de comparer la quantité de charge de l'intégrateur avec une valeur de seuil, et permet la transmission, dès le dépassement de la valeur de seuil, d'un signal au microcontrôleur, ce qui entraîne le prélèvement d'une quantité d'électricité de l'intégrateur par la capacité étalon, de sorte que la charge moyenne de l'intégrateur reste quasiment constante. Le nombre de fois où le comparateur est à "1" pendant une période donnée permet d'estimer le niveau du liquide dans le réservoir.

Bien que de tels capteurs de l'état de la technique puissent bien fonctionner, il est observé qu'ils n'offrent pas des précisions suffisantes pour certaines applications, notamment quand le condensateur de mesure et le condensateur de référence ont des capacités de valeurs fort différentes ou quand il y a lieu d'estimer de très faibles valeurs de capacités par rapport à la valeur des capacités parasites, ce qui peut être le cas par exemple quand les dimensions du capteur sont petites ou quand la permittivité du liquide est faible par rapport à celle de l'eau à température ambiante.

**Résumé de l'invention**

Un but de l'invention est de pallier les problèmes de l'état de la technique et en particulier de permettre l'obtention de mesures plus précises particulièrement pour les applications dans lesquelles le condensateur de mesure et le condensateur de référence ont des capacités de valeurs fort différentes.

A cette fin, le capteur selon l'invention est caractérisé en ce qu'il inclut en outre un condensateur étalon complémentaire, de capacité supérieure à celle du condensateur de référence et différente de celle du condensateur étalon; en ce que les moyens de contrôle sont destinés à mettre en oeuvre les étapes suivantes, sur des périodes d'accumulation successives et pour un condensateur cible et un condensateur de décharge donnés à chaque période: une première étape de chargement du condensateur cible par application d'une tension donnée à ses bornes; une deuxième étape de transfert de la charge du condensateur cible vers le condensateur d'intégration; une troisième étape de décision, consistant à passer une quatrième étape si le signal de comparaison est négatif; la quatrième étape de décharge d'une partie de la charge du condensateur d'intégration dans le condensateur de décharge et ensuite de décharge complète du condensateur de décharge; et une cinquième étape de retour à la première étape; et en ce que les condensateurs cible et de décharge donnés à chaque période sont respectivement pris parmi un groupe de paires de condensateurs, incluant le condensateur de mesure et le condensateur étalon, et le condensateur de référence et le condensateur étalon complémentaire.

En opération, et plus particulièrement au cours d'une période d'accumulation donnée, la charge stockée dans le condensateur d'intégration du capteur selon l'invention varie au fur et à mesure des étapes successives mises en oeuvre par les moyens de contrôle, de sorte que cette charge atteigne un certain nombre de fois une valeur de charge donnée correspondant à une tension de sortie supérieure ou égale à la tension de seuil, et correspondant à un signal de comparaison positif. Ce nombre est substantiellement proportionnel au rapport entre la capacité moyenne du condensateur cible sur la période d'accumulation donnée et la capacité du condensateur de décharge, de valeur connue

2

et substantiellement constante. Ce nombre permet ainsi aux moyens de contrôle d'estimer la capacité moyenne du condensateur cible sur la période d'accumulation donnée.

Le condensateur cible peut être le condensateur de mesure pour un certain nombre de périodes d'accumulation successives, pour ensuite être pour une période d'accumulation suivante le condensateur de référence. Quant au condensateur de décharge du capteur selon l'invention, contrairement aux capteurs de l'état de la techniques, il n'est pas indifféremment le même condensateur étalon que le condensateur cible soit le condensateur de mesure ou qu'il soit le condensateur de référence. Les condensateurs cible et de décharge donnés à chaque période d'accumulation sont respectivement pris parmi un groupe de paires de condensateurs, incluant le condensateur de mesure et le condensateur étalon, et le condensateur de référence et le condensateur étalon complémentaire. En d'autres termes, lors de l'estimation de la valeur de la capacité du condensateur de mesure, le condensateur étalon est utilisé comme condensateur de décharge, alors que, lors de l'estimation de la valeur de la capacité du condensateur de référence, le condensateur étalon complémentaire est utilisé comme condensateur de décharge.

Il est observé que cette association au condensateur cible d'un condensateur de décharge spécifique, c'est-à-dire l'association au condensateur de mesure du condensateur étalon et l'association au condensateur de référence du condensateur étalon complémentaire, permet d'obtenir des estimations plus précises. En effet, dans des conditions opérationnelles normales, le condensateur étalon a une capacité supérieure à celle du condensateur de mesure et le condensateur étalon complémentaire a une capacité supérieure à celle du condensateur de référence mais différente de celle du condensateur étalon. La capacité du condensateur étalon complémentaire est par exemple inférieure ou très inférieure à la valeur de la capacité du condensateur étalon.

L'association d'un condensateur cible donné avec un condensateur de décharge spécifique permet quelle que soit la paire en question d'obtenir sur une période d'accumulation donnée un taux de dépassement de seuil par chargement suffisamment grand et il est observé dans ce cas des rapports de valeurs de capacités plus fins et plus une précision de mesure accrue. Le taux de dépassement de seuil est le rapport du nombre de dépassements de seuil sur le nombre total de chargements pour une période d'accumulation donnée, rapport qui est substantiellement égal au rapport entre la valeur de la capacité cible sur la valeur de la capacité de décharge.

En d'autres termes, il est observé que plus proche est le condensateur cible du condensateur de référence, tout en restant toujours supérieur à celui-ci, plus précise est la mesure.

Le capteur selon l'invention présente un avantage supplémentaire en ce sens qu'il permet une plus grande de liberté dans le choix des types de condensateurs de mesure et de référence lors de la conception du capteur lui-même. Le calibrage des mesures adapté à la valeur à mesurer permet d'obtention d'une meilleure précision dans les résultats, et une plus grande liberté dans la conception.

Un autre objet de l'invention est de réduire les effets parasites des variations de température dus aux matériaux du support des condensateurs.

A cette fin, selon un mode particulier de réalisation, le capteur selon l'invention inclut en outre un premier condensateur de compensation, dont les caractéristiques évoluent en fonction de la température substantiellement de la même manière que les matériaux du support des condensateurs de mesure et de référence; et dans lequel le groupe de paires de condensateurs inclut en outre le premier condensateur de compensation et le condensateur étalon complémentaire.

Le rajout d'un premier condensateur de compensation et son appariement avec le condensateur étalon complémentaire permettent de mesurer les variations des propriétés du diélectrique du condensateur de compensation qui correspondent aux variations au cours du temps des matériaux du support des condensateurs de mesure et de référence. Ainsi, les moyens de contrôle peuvent intégrer une prise en compte de ces variations pour fournir le signal d'estimation.

En d'autres termes, le premier condensateur de compensation, de par sa composition et sa forme, est destiné à imiter l'évolution de l'influence des composants diélectriques des matériaux du support des condensateurs de mesure et de référence, pour compenser cette influence. En d'autres termes encore, l'objectif est l'utilisation d'un modèle plus raffiné de la réalité, menant des estimations plus précises, mais rajoutant au système une inconnue, la constante diélectrique des matériaux du support, et la solution proposée par l'invention est de rajouter au système une équation, issue de l'expression mathématique de la capacité du premier condensateur de compensation, qui est fonction de la constante diélectrique des matériaux du support.

Bien que cette résolution par mimétisme puisse paraître à première vue lourde et complexe afin d'améliorer la précision du signal d'estimation, le capteur selon l'invention et les étapes mises en oeuvre par les moyens de contrôle lors des périodes d'accumulation successives sont telles que le rajout d'une capacité d'un condensateur à mesurer rajoute très peu de complexité au capteur et à l'implémentation de ses moyens de contrôle, grâce à la nature flexible de la conception du capteur.

Aux fins seulement de bien comprendre le capteur selon l'invention par comparaison avec les systèmes de l'état de la technique, il est à noter que la demande internationale WO 01/79789 A2 divulgue un système de mesure du niveau, comprenant un circuit de mesure pouvant être utilisé en combinaison avec une sonde capacitive pour mesurer le niveau d'un matériau dans un réservoir. La sonde capacitive comprend une capacité de sonde et une capacité de référence utilisée pour calibrer le matériau particulier utilisé. Les problèmes d'imprécisions causées par les capacités parasites, notamment entre la capacité de sonde et la capacité de référence, qui peuvent être variables, par exemple suite à des variations de température, sont activement compensés par le circuit du système en question. Ce circuit comprend une source de courant et des interrupteurs permettant de fournir un courant constant au condensateur de mesure afin de garder la tension aux bornes du condensateur de référence au même niveau que la tension aux bornes du condensateur de mesure. Ceci élimine les capacités parasites en annulant la différence de tension aux bornes des conducteurs entre lesquels cette capacité parasite est susceptible d'apparaître.

Toujours dans le système de l'état de la technique, divulgué dans la demande internationale mentionnée ci-dessus, une fois la tension de mesure égale à 2 Volts, le temps pour arrivé est à cette tension est utilisé pour estimer la capacité du condensateur de mesure.

Ce n'est pas l'approche du capteur de niveau selon l'invention. Le capteur de niveau selon l'invention fonctionne différemment, selon un des ces modes de réalisation, par adjonction d'un premier condensateur de compensation, qui, d'une certaine façon et comme expliqué plus haut, imite les variations dues au support pour les intégrer dans le calcul. Ceci permet la conception d'une architecture de capteur relativement simple. Les opérations de contrôle et de calibrage sont également réduites.

Un autre objet de l'invention est de réduire les effets parasites des variations de température dus aux matériaux des couches protectrices des condensateurs.

A cette fin, selon un mode particulier de réalisation, le capteur selon l'invention inclut en outre un deuxième condensateur de compensation, dont les caractéristiques évoluent en fonction de la température substantiellement de la même manière respectivement que les matériaux des couches protectrices des condensateurs de mesure et de référence; et dans lequel le groupe de paires de condensateurs inclut en outre le deuxième condensateur de compensation et le condensateur étalon complémentaire.

Ce mode particulier de réalisation de l'invention permet la compensation de la capacité parasite due aux matériaux des couches protectrices et surtout la compensation et la prise en compte des effets de la variation de celles-ci en fonction de la température.

Ceci est applicable par exemple dans le cas où la sonde est un circuit imprimé avec des pistes en peignes imbriqués sur lesquelles sont ajoutés une couche isolante, par exemple de vernis, permettant d'éviter les courts-circuits.

Les équations nécessaires permettant aux moyens de contrôle de fournir le signal d'estimation peuvent être trouvées en détaillant les circuits équivalents des différentes capacités, comme illustré et expliqué plus loin à titre d'exemple seulement, et en intégrant les solutions des équations résultantes dans les moyens de contrôle.

L'invention concerne également un capteur où sont combinés le premier condensateur de compensation et le deuxième condensateur de compensation, pour améliorer la précision par prise en compte de l'influence à la fois des matériaux du support et des couches protectrices.

L'invention concerne également une méthode d'estimation du niveau d'un liquide dans un réservoir par mesure capacitive, incluant la mise en oeuvre des étapes suivantes, sur des périodes d'accumulation successives et pour un condensateur cible et un condensateur de décharge donnés à chaque étape : une première étape de chargement du condensateur cible par application d'une tension donnée à ses bornes; une deuxième étape de transfert de la charge du condensateur cible vers un condensateur d'intégration (18), connecté entre l'entrée inverseuse d'un amplificateur opérationnel et sa sortie; une troisième étape de décision, consistant à passer une quatrième étape si un signal de comparaison est négatif, le signal de comparaison étant fourni par un comparateur, destiné à comparer la tension de sortie de l'amplificateur à une tension de seuil; la quatrième étape de décharge d'une partie de la charge du condensateur d'intégration dans le condensateur de décharge et ensuite de décharge complète du condensateur de décharge; et une cinquième étape de retour à la première étape; les condensateurs cible et de décharge donnés à chaque période étant respectivement pris parmi un groupe de paires de condensateurs, incluant un condensateur de mesure, destiné à être disposé dans le réservoir, et un condensateur étalon, de capacité supérieure à celle du condensateur de mesure, et un condensateur de référence, destiné à être disposé dans le réservoir dans une partie basse de celui-ci, et le condensateur étalon complémentaire, de capacité supérieure à celle du condensateur de référence et différente de celle du condensateur étalon.

Cette méthode permet d'estimer de manière plus précise le niveau de liquide dans le réservoir, tout en permettant des mises en oeuvre peu coûteuses et flexibles.

L'invention concerne également l'utilisation d'un capteur tel que décrit ci-dessus, dans un réservoir d'un véhicule, par exemple un réservoir de carburant d'une automobile. Le capteur selon l'invention est particulièrement bien adapté à domaine d'application où les contraintes de coûts et de précision sont très importantes.

**Brève description des figures**

Ces aspects ainsi que d'autres aspects de l'invention seront clarifiés dans la description détaillée de modes de réalisation particuliers de l'invention, référence étant faite aux dessins des figures, dans lesquelles :

Fig. 1    montre une vue schématique d'une réalisation particulière du capteur selon l'invention;

Fig. 2    et 3 montrent des vues schématiques d'autres réalisations particulières du capteur selon l'invention;

Fig. 4    montre une vue schématique des étapes mises en oeuvre, sur une période d'accumulation donnée, par les moyens de contrôle d'une réalisation particulière du capteur selon l'invention;

Fig. 5    montre un condensateur de mesure utilisé selon une réalisation particulière du capteur selon l'invention; et

Fig. 6    montre un exemple de circuit équivalent qui peut être utilisé pour concevoir ou programmer les moyens de contrôle selon l'invention.

Les figures ne sont pas dessinées à l'échelle. Généralement, des éléments semblables sont dénotés par des références semblables dans les figures.

## Description détaillée de modes de réalisation particuliers

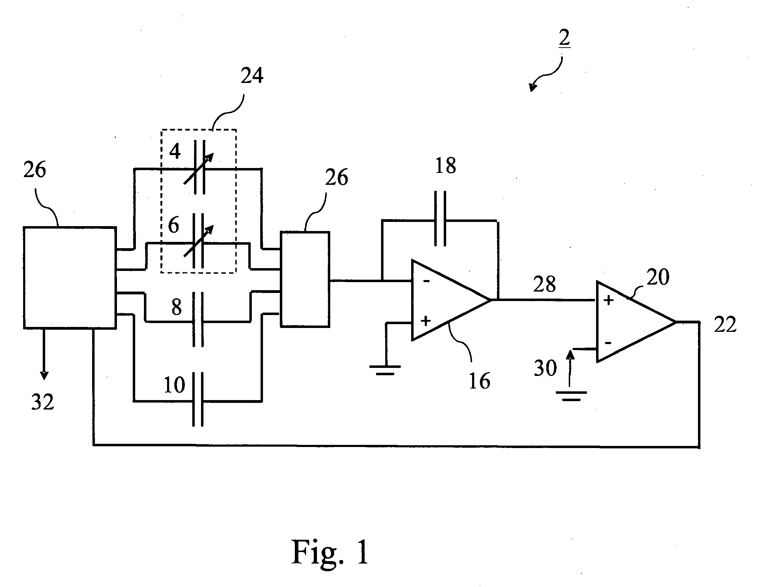

La Fig. 1 montre une vue schématique d'une réalisation particulière du capteur selon l'invention. Le condensateur de mesure 4, destiné à être disposé dans le réservoir 24, et représenté dans celui-ci, est connecté à ses bornes aux moyens de contrôle 26. Le condensateur de référence 6, destiné à être disposé dans une partie basse du réservoir 24, et nécessaire pour compenser les variations de la constante diélectrique du liquide, est également connecté à ses bornes aux moyens de contrôle 26. Le condensateur étalon 8 et le condensateur étalon complémentaire 10 sont disposés en dehors ou à l'intérieur du réservoir 24, par exemple sur un circuit électronique, qui peut être appelé « circuit électronique d'interprétation », et sont connectés à leurs bornes respectives aux moyens de contrôle 26.

La valeur de la capacité du condensateur de mesure 4 varie principalement en fonction du niveau du liquide dans le réservoir 24, c'est-à-dire de son niveau de remplissage, et mais également en fonction de la constante diélectrique du liquide en question. La valeur de la capacité du condensateur de référence 6 varie principalement en fonction de la constante diélectrique du liquide en question. En opération, le condensateur de référence 6 est destiné de préférence à être immergé en permanence dans le liquide. Les valeurs du condensateur étalon 8 et du condensateur étalon complémentaire 10 ne sont pas destinées à varier en fonction du niveau 44 du liquide ou de sa constante diélectrique. Ces dernières valeurs sont destinés à rester généralement constantes quelque soit les évolutions de niveau 44 ou de température dans le réservoir 24.

L'amplificateur opérationnel 16 est connecté en sa borne inverseuse aux moyens de contrôle 26 et en sa borne non-inverseuse à une tension donnée en opération, par exemple à la masse. Il fournit une tension de sortie 28. Le condensateur d'intégration 18 est connecté entre la borne non-inverseuse et la sortie de l'amplificateur opérationnel 16.

La tension de sortie 28 ou signal de sortie est fourni à la borne non-inverseuse du comparateur 20. En opération, une tension de seuil 30 est appliquée à la borne inverseuse du comparateur 20 de sorte que le signal de comparaison 22 est positif, ou égal à 1 par exemple, si la tension de sortie 28 est supérieure à la tension de seuil 30 et négatif, ou égal à 0 par exemple, dans le cas contraire.

Par une connexion représentée dans la partie inférieure de la Fig. 1, le signal de comparaison 22 est fourni aux moyens de contrôle 26, qui fournissent à leur tour un signal d'estimation 32 du niveau 44 du liquide dans le réservoir 24.

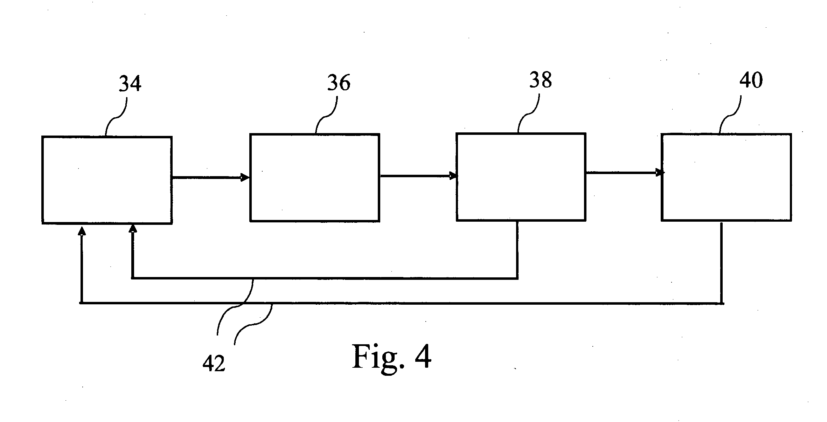

En opération, et par référence à la fois à la Fig. 1 et à la Fig. 4, le capteur 2 selon une réalisation particulière de l'invention fonctionne de la manière suivante. Des périodes d'accumulation se succèdent. A noter que celles-ci pourraient bien entendu porter d'autres noms, par exemple périodes d'estimation ou périodes de mesure d'une capacité sans s'écarter de l'esprit de l'invention. Chaque période a pour but l'estimation de la valeur de la capacité d'un condensateur variable, c'est-à-dire, selon un mode de réalisation particulier, soit du condensateur de mesure 4, soit du condensateur de référence 6.

Par exemple, un certain nombre $p$ de périodes d'accumulation associées au condensateur de mesure 4 peuvent avantageusement se succéder avant qu'ait lieu une période d'accumulation associée au condensateur de référence 6, suite à quoi le cycle peut reprendre. Ce mode de fonctionnement est adapté aux cas où le niveau 44 du liquide dans le réservoir 24 varie plus vite que ses propriétés diélectriques.

A une période d'accumulation donnée, qui peut par exemple durer 600 millisecondes, sont toujours associés un condensateur dit cible (soit le condensateur de mesure 4 soit le condensateur de référence 6) et un condensateur dit de décharge (respectivement soit le condensateur étalon 8, soit le condensateur étalon complémentaire 10). Les couples, ou paires de condensateur, sont spécifiques et adaptés du point de vue de la valeur des capacités à mesurer, ce qui permet l'obtention d'une estimation plus précise du niveau 44 de liquide. Un condensateur étalon 8 et un condensateur étalon complémentaire 10, distincts, sont en effet choisis en raison de la différence importante entre les gammes des valeurs attendues de la capacité du condensateur de mesure 4 et des valeurs attendues de la capacité du condensateur de référence 6.

Lors d'une période d'accumulation, les moyens de contrôle 26 sont cadencées par une horloge et mettent en oeuvre les étapes suivantes. Le condensateur cible 4, 6 est, dans une première étape 34, électriquement chargé par application à ses bornes d'une tension déterminée. Ensuite, dans une deuxième étape 36, la charge du condensateur cible est transférée au condensateur d'intégration 18. Ceci peut par exemple être mis en oeuvre par un système d'interrupteurs à capacités commutées. Dans une troisième étape 38, le signal de comparaison 22 est examiné par les moyens de contrôle 26. S'il est positif, une quatrième étape 40 est mise oeuvre, consistant à décharger partiellement le condensateur d'intégration 18 dans le et grâce au condensateur de décharge 8, 10 et à ensuite décharger complètement le condensateur de décharge 8, 10. La première étape 34 et les suivantes sont alors mises en oeuvre à nouveau dans l'ordre, ce retour à la première étape 34 constituant la cinquième étape 42. Si le signal de comparaison 22 est négatif, la première étape 34 et les suivantes sont directement mises en oeuvre à nouveau; en d'autres termes, la quatrième étape 40 est passée et la cinquième étape 42, de retour, est directement mise en oeuvre.

Le nombre de dépassement de seuil $n_{seuil}$, correspondant au nombre de fois que le signal de comparaison 22 est devenu positif sur une période d'accumulation donnée, est substantiellement égal au rapport de la valeur de la capacité du condensateur cible $C_{cible}$ sur la valeur de la capacité du condensateur de décharge $C_{décharge}$, le tout multiplié par le nombre de chargement $n_{total}$ du condensateur d'intégration 18. L'équation correspondante est

$$n_{seuil} = \frac{C_{cible}}{C_{déch\,arg\,e}} \cdot n_{total}$$

Plus spécifiquement, en remplaçant respectivement la valeur de la capacité du condensateur cible par la valeur $C_{mesure}$ de la capacité du condensateur de mesure 4 puis par la valeur $C_{référence}$ de la capacité du condensateur de référence 6 et la valeur de la capacité du condensateur de décharge par la valeur $C_{étalon,8}$ de la capacité du condensateur étalon 8 puis par la valeur $C_{étalon,10}$ de la capacité du condensateur étalon complémentaire 10, on obtient

$$n_{seuil,mesure} = \frac{C_{mesure}}{C_{étalon,8}} \cdot n_{total}$$

$$n_{seuil,référence} = \frac{C_{référence}}{C_{étalon,10}} \cdot n_{total}$$

En outre, le nombre de dépassement de seuil « à vide » $n_{seuil,mesure,vide}$, c'est-à-dire lorsque le niveau 44 de liquide dans le réservoir 24 est inférieur à la limite inférieure du condensateur de mesure 4, celui-ci n'étant alors influencé que par le gaz au-dessus du liquide s'exprime de la même manière. On a

$$n_{seuil,mesure,vide} = \frac{C_{mesure,vide}}{C_{étalon,8}} \cdot n_{total}$$

Comme le niveau relatif h du liquide dans le réservoir 24 s'exprime substantiellement par l'expression suivante :

$$h = k. \frac{C_{mesure} - C_{mesure,vide}}{C_{étalon,8}}$$

on a ainsi :

$$h = k. \frac{n_{seuil,mesure} - n_{seuil,mesure,vide}}{n_{total}}$$

Le facteur k représente le facteur prenant en compte les variations des propriétés des diélectriques du condensateur de mesure 4 (variations dues à la composition du liquide, par exemple un carburant, ou de la température), c'est-à-dire principalement les variations de la constante diélectrique du liquide dont on mesure le niveau 44, compensé par l'estimation de la capacité du condensateur de référence 6. En définitive, on a

$$h = \frac{n_{seuil,référence,vide}}{n_{seuil,mesure,vide}} \cdot \frac{n_{seuil,mesure} - n_{seuil,mesure,vide}}{n_{seuil,référence} - n_{seuil,référence,vide}}$$

où les nombres de dépassements de seuil « à vide » sont estimés avant le remplissage du réservoir 24, puis mémorisés par les moyens de contrôle 26 par exemple.

Les moyens de contrôle 26 peuvent par exemple être implémentées avec des interrupteurs à capacités commutées, à horloges non recouvrantes, pour éviter d'éventuels courts-circuits ou autres effets indésirables. Les moyens de contrôle 26 gèrent et mettent en oeuvre notamment à la fois les calculs d'estimation de niveau et les transferts de charge lors d'une période d'accumulation.

Les condensateurs de mesure 4 et de mesure 6 peuvent par exemple être physiquement des paires de plaques planes parallèles, des tubes coaxiaux ou des peignes imbriqués sur substrat plan ou circuit imprimé.

Il est à noter encore qu'entre deux périodes d'accumulation, qu'une mesure sur une paire donnée de condensateur « cible, décharge » succède à une mesure sur la même paire ou à une mesure sur une autre paire, le condensateur d'intégration 18 peut ou non être déchargé dans l'intervalle entre les deux périodes d'accumulation.

Le signal d'estimation 32 peut être utilisé par exemple pour indiquer ou afficher le niveau 44 du liquide dans le réservoir 24 ou pour piloter directement ou indirectement une électrovanne de remplissage du réservoir 24 ou tout autre actuateur, par exemple dans le but d'assurer la sécurité, notamment si le réservoir 24 est destiné à être un réservoir 24 de carburant d'un véhicule.

Selon un mode de réalisation du capteur 2 selon l'invention, l'influence d'autres diélectriques est prise en compte pour fournir le signal d'estimation 32. Ces autres diélectriques peuvent notamment être propres à l'architecture de la partie du capteur 2 destinée à être en contact avec le liquide dans le réservoir 24, c'est-à-dire propres à l'agencement relatif des condensateurs de mesure 4 et de référence 6 et à leur conception physique.

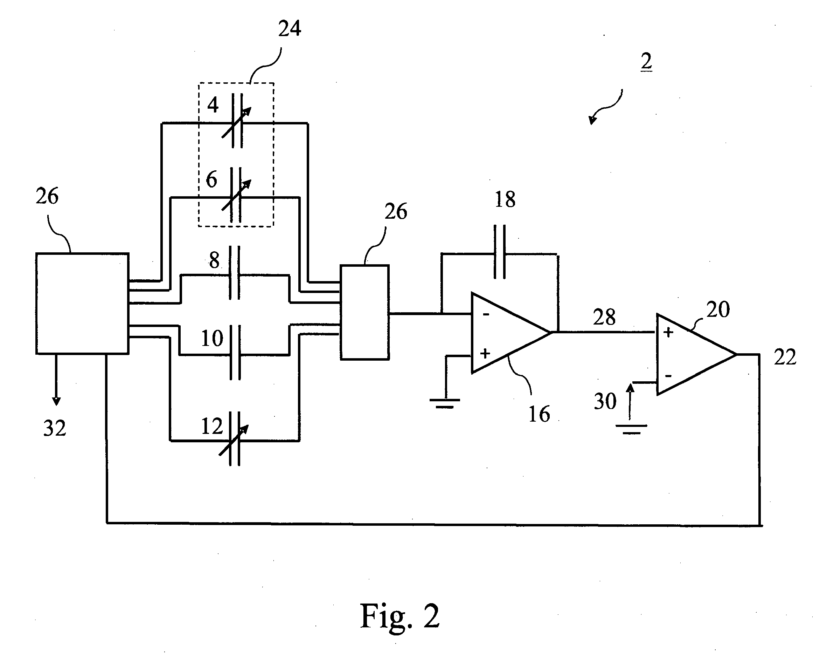

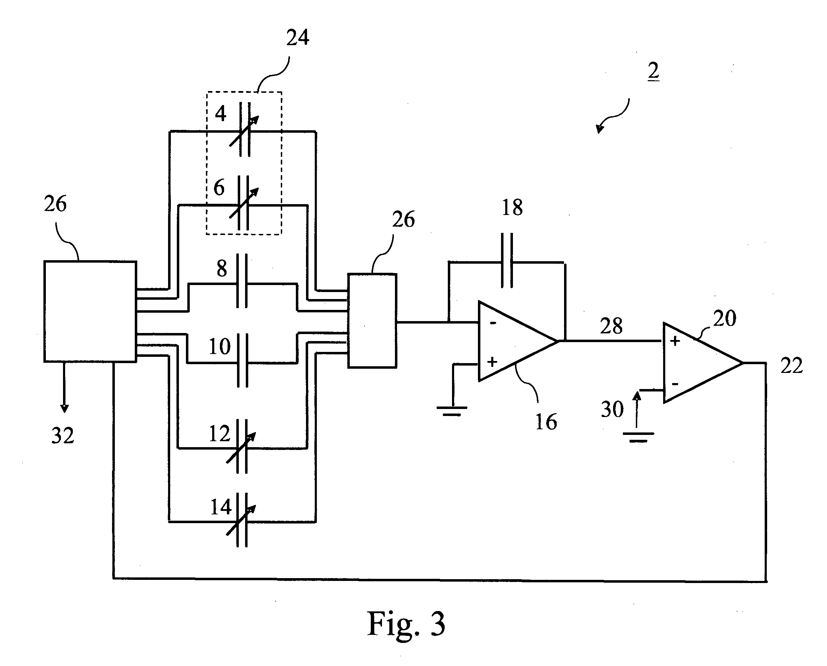

Deux modes de réalisations plus particuliers de ce mode sont décrits ci-dessus en faisant référence aux Fig. 2 et 3 respectivement. Suivent ensuite une explication non limitative des raisons pour lesquelles les moyens de contrôle 26 sont aptes de fournir un signal d'estimation 32 sur cette base, et une explication de la manière avec laquelle ils peuvent le faire.

La Fig. 2 montre une vue schématique d'une réalisation particulière du capteur 2 selon l'invention, dans laquelle l'influence d'autres diélectriques est prise en compte par les moyens de contrôle 26 pour fournir le signal d'estimation 32. Plus précisément, c'est l'influence des variations en fonction de la température de la constante diélectrique des matériaux du support des condensateurs de mesure 4 et de référence 6 qui est pris en compte.

Par matériaux du support, il faut entendre par exemple, dans le cas d'une implémentation des condensateurs de mesure 4 et de référence 6 par deux plaques planes parallèles, les entretoises et autres éléments de support permettant de maintenir les plaques parallèles à distance substantiellement constante l'une de l'autre, dans le cas d'une implémentation par tubes coaxiaux, les éléments de support séparant les deux électrodes coaxiales et, dans le cas d'une implémentation par peignes imbriqués posés sur un substrat diélectrique, le substrat lui-même.

Un premier condensateur de compensation 12 est présenté sur la Fig. 2. Il est disposé dans l'environnement du réservoir 24, c'est-à-dire dans celui-ci ou proche de celui-ci, ou encore dans des conditions environnementales similaires ou identiques à celui-ci, et est connecté en ses bornes aux moyens de contrôle 26. Les propriétés du diélectrique du premier condensateur de compensation 12 évoluent en fonction de la température, et d'autres facteurs éventuellement, substantiellement de la même manière que les matériaux du support des condensateurs de mesure 4 et de référence 6, de manière à imiter leur évolution et à permettre leur prise en compte et leur compensation par les moyens de contrôle 26 pour fournir le signal d'estimation 32.

La valeur de la capacité du premier condensateur de compensation 12 est estimée périodiquement lors d'une période d'accumulation donnée par association avec un condensateur de décharge, par exemple le condensateur étalon complémentaire 10. Cette valeur est utilisée par les moyens de contrôle 26 pour fournir le signal d'estimation 32.

Selon ce mode de réalisation particulier peut par exemple être prise en compte l'influence des variations de la constante diélectrique de l'isolant formant le support, qui est par exemple en une résine thermodurcissable renforcée ou non, ou une résine thermoplastique. La constante diélectrique d'un tel matériau varie en effet sensiblement notamment avec la température et pourrait, sans cette compensation, entacher d'une erreur l'estimation.

La Fig. 3 montre une vue schématique d'une réalisation particulière du capteur 2 selon l'invention, dans laquelle l'influence des variations en fonction de la température de la constante diélectrique des matériaux du support et des matériaux des couches protectrices des condensateurs de mesure 4 et de référence 6 est prise en compte.

Par couche protectrice, il faut entendre, par exemple, un isolant à base de polymère ou de vernis, qui peut être avantageusement utilisé pour diverses raisons, ou tout autre couche obtenue notamment par traitement de surface du conducteur par exemple par oxydation contrôlée. Une raison peut être notamment d'éviter les effets de la capillarité du liquide sur les électrodes, cette capillarité pouvant en effet entraîner des erreurs d'estimation en modifiant (soit en plus soit en moins) au contact de la surface la hauteur réelle du niveau du liquide dans le réservoir, spécialement dans des cas d'implémentation de condensateur du type par peignes imbriqués sur substrat plan. Comme déjà mentionné, une autre raison peut être d'éviter les courts-circuits entre les électrodes du condensateur, lors de l'insertion entre ceux-ci d'impuretés électriquement conductrices.

Cette couche protectrice dégrade la précision de la mesure et sa prise en compte améliore la précision.

Par généralisation, l'estimation du niveau 44 du liquide peut se faire en adjoignant au capteur 2 un nombre quelconque de condensateurs de compensation supplémentaires, de manière à prendre en compte d'autres capacités parasites, correspondant par exemple au nombre de milieux différents dans l'environnement de la partie physique du capteur 2. L'influence des connexions électriques peut par exemple aussi faire l'objet d'une telle compensation.

Les moyens de contrôle 26 sont capables de fournir sur cette base un signal d'estimation 32 compensé pour les raisons et selon les modalités expliquées ci-dessous.

La valeur d'une capacité C d'un condensateur vaut, d'une manière générale

$$C = \sum_i epsilon_i \cdot A_i$$

où les *epsilon_i* représentent les constantes diélectriques des matériaux présents près des électrodes et où

$$A_i = \frac{S_i \cdot epsilon_0}{e_i} \, ,$$

où $S_i$, *epsilon_0* et $e_i$ représentent respectivement la surface des électrodes, la constante diélectrique de l'air ou du gaz présent au-dessus du liquide et l'entrefer correspondant à cet isolant i.

Selon le modèle électrostatique général et à partir de la loi de Gauss, de la relation de circulation du champ électrique et la définition de la capacité, la capacité d'un condensateur formé par de deux conducteurs aux potentiels A et B et par *n* diélectriques est, par décomposition en sous-domaines dans chacun desquels la permittivité du diélectrique est uniforme (par exemple des domaines constitués d'un seul diélectrique),

$$C = \frac{\left( \sum_{i=1}^{n} \iint_{AB_i} epsilon_i \cdot \vec{E}_i \cdot d\vec{S}_i \right)}{\int_{A}^{B} \vec{E} \cdot d\vec{S}}$$

Cette formulation générale peut parfois être simplifiée lorsque la géométrie du condensateur formé par les conducteurs respecte certaines conditions.

Par exemple, pour deux condensateurs infinis plans d'entrefer constant soumis à une différence de tension uniforme (montage en parallèle), on a

$$C = \frac{\left( \sum_{i=1}^{n} epsilon_i \cdot S_i \right)}{d_i} = \sum_{i=1}^{n} C_i$$

Pour deux condensateurs cylindriques de longueur infinie en série, on a

$$C_{equivalent}^{-1} = \left(\frac{1}{2 \cdot pi}\right) \cdot \sum_{i=1}^{n} \left\{ epsilon_i \cdot l \middle/ \left[\ln\left(\frac{R_{ei}}{R_{ii}}\right)\right]^{-1} \right\}$$

où $R_{ei}$ et $R_{ii}$ sont les rayons intérieur et extérieur du condensateur i formé par le diélectrique *i*.

D'une manière plus générale, on peut décomposer tout condensateur réel en un certain nombre de condensateurs élémentaires constitués d'un diélectrique homogène pour lesquels la capacité s'écrit

$$C = \frac{epsilon_i \cdot \iint_{AB_i} \vec{E}_i \cdot d\vec{S}_i}{\int_A^B \vec{E}_i \cdot d\vec{S}}$$

pour toute géométrie des armatures. Il est ainsi possible d'écrire chacune des intégrations en un développement limité de termes dont le nombre peut être ajusté selon la précision souhaitée.

En première approximation sur les intégrales, par exemple, si le champ E est faiblement variable, on obtient

$$\iint_{AB_i} \vec{E}_i \cdot d\vec{S}_i \sim E_i.f(S) \quad \text{et} \quad \int_A^B \vec{E}_i \cdot d\vec{s} \sim E_i g_i\left(d_i\right)$$

d'où, il vient que

$$\frac{\left(\iint_{AB_i} \vec{E}_i \cdot d\vec{S}_i\right)}{\int_A^B \vec{E}_i \cdot d\vec{s}} \sim \frac{f(S)}{g(d)} \sim G(S, 1/d)$$

et

$$C_i = \varepsilon_i . G(S, 1/d).$$

Selon le modèle circuit, par ailleurs, lorsque l'on recompose le condensateur réel à partir des différents condensateurs élémentaires, on aboutit à un circuit représentatif où les capacités élémentaires sont agencées en série et/ou en parallèle. Ce type de problème est résoluble en utilisant la loi des mailles pour les branches en série et la loi des noeuds pour les branches en parallèle.

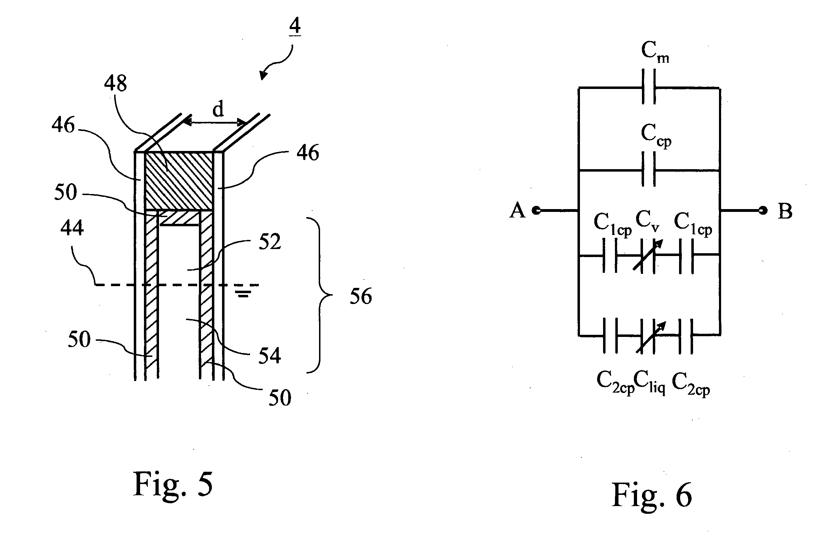

Pour l'exemple et à titre illustratif, la Fig. 5 montre un condensateur de mesure 4 utilisé selon une réalisation particulière du capteur 2 selon l'invention et la Fig. 6 montre quant à elle un exemple de circuit équivalent du condensateur de mesure 4 de la Fig. 5. Ce circuit équivalent peut être utilisé pour concevoir ou/et programmer les moyens de contrôle 26 selon l'invention. Le condensateur de mesure 4 est représenté de façon simplifiée et schématique sur la Fig. 5 tout comme son modèle circuit ou circuit équivalent sur la Fig. 6.

Les Fig. 5 et 6 sont présentées plus en détail dans ce qui suit. La Fig. 5 montre les deux électrodes 46 du condensateur de mesure 4. Elles sont séparées par une distance d. Un substrat ou matériau de support est disposé dans une zone 48, dite zone du matériau de support 48. Cette zone couvre une aire $S_m$ (en coupe) et le matériau la remplissant présente une permittivité relative $epsilon_m$. Une couche protectrice est disposée dans la zone 50, dite zone de la couche protectrice 50. Cette zone couvre une aire $S_{cp}$ et le matériau la remplissant a une permittivité relative $epsilon_{cp}$.

La zone 56, dite zone de capacité variable 56, a une capacité variable avec le niveau 44 du liquide et une aire $S_u$ partagée en opération entre gaz et liquide selon le niveau 44 du liquide. La zone de capacité variable 56 est séparée en deux parties: d'une part, la zone 54 baignée par le liquide, d'aire

$$S_u \cdot H$$

où H est la hauteur relative, et de permittivité relative *epsilon*$_r$ et, d'autre part, la zone 52 baignée par le gaz ou l'air, d'aire

$$S_u \cdot (1 - H)$$

et de permittivité relative substantiellement égale à 1.

La capacité du condensateur de mesure 4, c'est-à-dire la capacité entre les électrodes 46 représentées sur la Fig. 5 ou encore la capacité entre les bornes A et B sur le circuit équivalent de la Fig. 6, peut être calculée en décomposant le condensateur et sa capacité en quatre parties, correspondant à quatre capacités en parallèle, de valeur :

$$C_1 = C_m = epsilon_0 \cdot epsilon_m \cdot \frac{S_m}{d}$$

$$C_2 = C_{cp} = epsilon_0 \cdot epsilon_{cp} \cdot \frac{S_{cp}}{d}$$

$$C_3 = \left( \frac{1}{C_{1cp}} + \frac{1}{C_v} + \frac{1}{C_{1cp}} \right)^{-1} = epsilon_0 \cdot S_u \cdot (1 - H) \cdot \left( \frac{2 \cdot e}{epsilon_{cp}} + (d - 2 \cdot e) \right)^{-1}$$

$$C_4 = epsilon_0 \cdot S_u \cdot H \cdot \left( \frac{2 \cdot e}{epsilon_{cp}} + \frac{d - 2 \cdot e}{epsilon_r} \right)^{-1} .$$

Ainsi, par addition, on obtient une expression mathématique de la valeur $C_{12}$ de la capacité du condensateur de mesure 4 :

$$C_{12} = epsilon_0 \cdot \left\{ \begin{array}{l} \left( epsilon_m \cdot \frac{S_m}{d} \right) + \left( epsilon_{cp} \cdot \frac{S_{cp}}{d} \right) \\ + S_u \cdot (1 - H) \cdot \left( \frac{2 \cdot e}{epsilon_{cp}} + (d - 2 \cdot e) \right)^{-1} \\ + S_u \cdot H \cdot \left( \frac{2 \cdot e}{epsilon_{cp}} + \frac{d - 2 \cdot e}{epsilon_r} \right)^{-1} \end{array} \right\} .$$

La relation qui relie la hauteur relative H de liquide à la valeur $C_{12}$ de la capacité du condensateur de mesure 4 dépend de l'état du liquide via *epsilon*$_r$, ainsi que de deux autres paramètres *epsilon*$_m$ et *epsilon*$_{cp}$ issus de la réalisation pratique du capteur 2 via les matériaux utilisés. De manière similaire, la valeur $C_{11}$ de la capacité du condensateur de référence 6 s'écrit, en y adjoignant les indices "r",

$$C_{11} = epsilon_0 \cdot \left\{ \left[ \left( epsilon_m \cdot \frac{S_{mr}}{d} \right) + \left( epsilon_{cp} \cdot \frac{S_{cpr}}{d} \right) \right] + S_{ur} \cdot \left( \frac{2 \cdot e}{epsilon_{cp}} + \frac{d - 2 \cdot e}{epsilon_r} \right)^{-1} \right\}$$

Par la mise en place judicieuse d'armatures ou par tout autre moyen, le premier condensateur de compensation 12 est réalisé et adjoint à l'environnement du condensateur de mesure 4 et du condensateur de référence 6. Ce premier condensateur de compensation 12, grâce aux propriétés de son diélectrique et grâce à sa forme, imite, éventuellement via un facteur de proportionnalité ou une fonction d'association préétablie par mesure préalable, l'évolution en fonction de la température par exemple de la capacité $C_1$, et il simule les condensateurs avec les mêmes épaisseurs et des matières identiques issues de fabrications identiques. La valeur de la capacité mesurée aux bornes du premier condensateur de compensation 12 vaut substantiellement

$$C_1' \sim epsilon_0 \cdot epsilon_m \cdot \frac{S_m}{d} \qquad \text{(équation 1)}$$

De même, la valeur de la capacité mesurée aux bornes du deuxième condensateur de compensation 14 vaut substantiellement

$$C_2' \sim epsilon_0 \cdot epsilon_{cp} \cdot \frac{S_{cp}}{d} \qquad \text{(équation 2)}$$

Enfin, sachant, par mesure préalable, que les valeurs des capacités des condensateurs de mesure 4 et de référence 6, lorsque le réservoir 24 est complètement vide, sont respectivement substantiellement égales à

$$C_{120} = epsilon_0 \cdot \left\{ \left[ \left( epsilon_m \cdot \frac{S_m}{d} \right) + \left( epsilon_{cp} \cdot \frac{S_{cp}}{d} \right) \right] + S_u \cdot \left( \frac{2 \cdot e}{epsilon_{cp}} + (d - 2 \cdot e) \right)^{-1} \right\}$$

$$C_{110} = epsilon_0 \cdot \left\{ \left[ \left( epsilon_m \cdot \frac{S_{mr}}{d} \right) + \left( epsilon_{cp} \cdot \frac{S_{cpr}}{d} \right) \right] + S_{ur} \cdot \left( \frac{2 \cdot e}{epsilon_{cp}} + (d - 2 \cdot e) \right)^{-1} \right\},$$

on obtient l'expression suivante

$$C_{12} - C_{120} = epsilon_0 \cdot S_u \cdot H \left\{ \left( \frac{2 \cdot e}{epsilon_{cp}} + \frac{(d - 2 \cdot e)}{epsilon_r} \right)^{-1} - \left( \frac{2 \cdot e}{epsilon_{cp}} + (d - 2 \cdot e) \right)^{-1} \right\} \quad \text{(équation 3)}$$

et

$$C_{11} - C_{110} = epsilon_0 \cdot S_{ur} \left\{ \left( \frac{2 \cdot e}{epsilon_{cp}} + \frac{(d - 2 \cdot e)}{epsilon_r} \right)^{-1} - \left( \frac{2 \cdot e}{epsilon_{cp}} + (d - 2 \cdot e) \right)^{-1} \right\} \quad \text{(équation 4)}$$

On obtient ainsi un système de quatre équations linéaires (équations 1 à 4) à quatre inconnues, qui sont $H$, $epsilon_{cp}$, $epsilon_r$ et $epsilon_m$ et pour lequel les méthodes de résolution sont bien connues. Celles-ci peuvent être avantageusement intégrées dans les moyens de contrôle 26.

Ce raisonnement peut être généralisé. En effet, les condensateurs de forme quelconque peuvent être modélisés en superposant l'effet des différents domaines caractérisés par un seul diélectrique selon la formule générale

$$C_i = \varepsilon_i . G(S, 1/d),$$

c'est-à-dire une dépendance linéaire de la capacité de ce condensateur avec la permittivité du milieu.

La mesure des différentes capacités judicieusement choisies permet donc de disposer d'un système d'équations linéaire résoluble. La résolution de ce système est donc possible et permet de calculer une estimation précise de la hauteur du liquide indépendamment des caractéristiques des diélectriques constituant la sonde de niveau et ce, quelque soit leur nombre.

Dans un mode de réalisation particulier du capteur 2 selon l'invention, le capteur 2 inclut un circuit électronique disposé dans la partie haute du capteur 2, de manière à mettre en oeuvre notamment les moyens de contrôle 26, et inclut en outre une piste de connexion menant du condensateur de référence 6 au circuit électronique. D'autre part selon ce mode de réalisation, l'influence de la capacité parasite engendrée par la présence de la piste de connexion est prise en compte pour l'estimation du niveau 44 du liquide.

Cette piste de connexion est matérialisée par une piste ou un câble disposé le long du condensateur de mesure 4, et qui s'étend sur toute la hauteur de ce condensateur et permet la transmission de la mesure de la capacité du condensateur de référence 6 au circuit. La piste de connexion agit comme une capacité additionnelle qui s'ajoute à la capacité du condensateur de référence 6. Cette capacité parasite varie en fonction du niveau 44 du liquide puisque la piste est disposée dans la zone 56 de capacité variable.

Par un raisonnement similaire à celui développé dans ce qui précède, un circuit équivalent à trois capacités en série peut être développé pour analyser l'influence de la piste de connexion sur la valeur mesurée de la capacité du condensateur de référence 6 et en compenser la présence dans les moyens de contrôle 26. Il sera clair pour l'homme du métier, au vu de ce qui précède, que le niveau 44 relatif de liquide peut être estimé par une fonction de plusieurs capacités correspondant notamment à l'influence de l'implémentation physique du capteur 2 et des constantes diélectriques de matériaux, moyennant l'adjonction de condensateur de compensation pour chacune des inconnues rajoutées, correspondant aux différents diélectriques présents dans la structure de la partie physique du capteur 2 ou avoisinant cette dernière et apparaissant dans le ou les équations à résoudre.

Ce capteur 2 permet d'améliorer la précision de l'estimation du niveau 44 du liquide.

Selon un mode de réalisation du capteur 2 selon l'invention, l'influence des diélectriques ou de certains diélectriques de structure n'est pas compensée par l'adjonction de condensateurs de compensation, mais est prise en compte par un calibrage préalable.

Selon un mode de réalisation du capteur 2 selon l'invention, le condensateur étalon 8, jouant le rôle de condensateur de décharge lors d'une période d'accumulation et étant associé à un condensateur cible dont la valeur n'est a priori pas connue, est sélectionné préalablement de manière automatique, en fonction d'une mesure initiale de la constante diélectrique du liquide, par le biais le condensateur de référence 6. Ceci améliore la précision de la mesure de la valeur de la capacité du condensateur cible, par exemple du condensateur de mesure 4.

Selon un mode de réalisation du capteur 2 selon l'invention, le condensateur de référence 6 est utilisé pour mesurer le niveau 44 du liquide sur la hauteur même de celui-ci.

Le condensateur de référence 6 a classiquement pour but de mesurer les variations de constante diélectrique du liquide présent dans le réservoir 24 en fonction de la température et de la composition du liquide. La présence même de ce condensateur de référence 6 empêche de mesurer le niveau 44 de liquide quand ce niveau est très bas. Il est toutefois possible d'obtenir une valeur de niveau 44 de liquide, certes avec une moindre précision, en gardant en mémoire la valeur de la capacité à vide lors du premier remplissage du réservoir 24.

Selon un mode de réalisation du capteur 2 selon l'invention, les moyens de contrôle 26 fonctionnent différemment lors du remplissage du réservoir 24 et lors de la descente du liquide dans le réservoir 24. Dans les applications automobiles notamment et quand le réservoir 24 est un réservoir de carburant par exemple, l'évolution du niveau 44 du liquide est beaucoup plus lente lors de la descente du niveau 44 que lors du remplissage du réservoir 24. Une adaptation de la succession des périodes d'accumulation et de leur durée en fonction du type de processus examiné, une descente ou une montée du niveau 44 du liquide, peut avantageusement être intégrée et mise en oeuvre dans les moyens de contrôle 26.

Selon un mode de réalisation du capteur 2 selon l'invention, les moyens de contrôle 26 sont réalisés sous forme électronique et la partie électronique correspondante est disposée à l'intérieur du réservoir 24, dans la phase liquide ou vapeur, immédiatement à proximité des armatures des condensateurs de référence 6 et de mesure 4. Ceci permet de réduire les capacités parasites dues à la longueur des connexions entre les armatures et le circuit électronique, de réduire l'influence de la température, de produire un seul circuit imprimé, dans le cas d'une implémentation utilisant des circuits imprimés pour la réalisation des moyens de contrôle 26 et des condensateurs de mesure 4 et de référence 6 dans le réservoir 24, et de simplifier la fabrication tout en diminuant les coûts.

Il sera clair pour l'homme du métier que le capteur 2 selon l'invention peut être utilisé par exemple pour un réservoir 24 de véhicule, par exemple d'automobile, et que le liquide peut par exemple être du carburant, que ce soit notamment du gazole, de l'essence ou du gaz pétrole liquéfié.

Dans le contexte de l'invention, l'expression « disposé dans le réservoir 24 » signifie à la fois dans le réservoir 24, mais aussi au bord du réservoir 24 dans la mesure où la capacité des condensateurs dont la disposition est concernée est influencée de manière significative et mesurable par les changements de diélectrique à l'intérieur du réservoir 24.

L'expression « disposé dans une partie basse du réservoir 24 » signifie disposé suffisamment bas dans celui-ci de manière à être apte à fournir généralement une mesure de référence non dépendante du niveau 44, sauf éventuellement dû aux effets de connexion, et en opération en permanence toujours immergé, de préférence. Le condensateur de référence 6 peut aussi être par exemple disposé dans le conduit d'évacuation du réservoir 24.

Toujours dans le contexte de l'invention, l'expression « de capacité supérieure à celle du condensateur de mesure 4 » signifie supérieure à la valeur capacité du condensateur de mesure 4 dans des conditions normales d'utilisation, c'est-à-dire quand le liquide présente par exemple une constante diélectrique comprise entre 1 et 80 ou environ 80.

Il sera clair pour l'homme du métier que les moyens de contrôle 26 peuvent être notamment des moyens électriques, électroniques ou informatiques, réalisés par exemple sous la forme d'un ou plusieurs circuits électroniques ou d'un ou plusieurs microprocesseurs.

Il sera en outre clair pour l'homme du métier que le signal d'estimation 32 du niveau 44 du liquide peut être soit analogique, soit digital sans s'écarter du principe de l'invention. Si les moyens de contrôle 26 sont réalisés sous la forme d'un circuit électronique et que celui-ci est disposé dans le réservoir 24, un signal analogique peu sensible aux perturbations extérieures ou un signal digital sont préférés selon un mode de réalisation de l'invention pour transmettre le signal d'estimation du réservoir.

Il sera clair pour l'homme du métier que l'amplificateur opérationnel 16 et le comparateur 20 peuvent être quelconques, quel que soient leur réalisation, leur qualité, leur impédance d'entrée et de sortie ou leur idéalité.

Les transferts de charge peuvent par exemple être mis en oeuvre par un système de capacités commutées, à cycles non-recouvrants, pour éviter d'éventuels courts-circuits et autres désagréments comme expliqués plus haut.

La durée des périodes d'accumulation peut par exemple être de 600 millisecondes. En général, plus la période est longue, plus la mesure est précise. Néanmoins, comme il est souvent nécessaire d'obtenir une mesure suffisamment régulièrement, limiter dans une certaine mesure la durée des périodes d'accumulation est incontournable.

La durée de la période transitoire avant d'arriver en régime et consistant à charger le condensateur d'intégration 18 depuis une valeur nulle jusqu'à la tension de seuil 20 peut varier en fonction de la capacité du condensateur cible et en fonction de la capacité du condensateur d'intégration 18. Cette durée peut par exemple être de 50 à 200 microsecondes. La tension de seuil 30 peut quant à elle par exemple être de 2.5 volts.

Selon un mode particulier de réalisation de la méthode selon l'invention, lorsqu'un niveau 44 atypique est estimé, un signal d'alerte est fourni, de sorte que par exemple la présence d'un liquide indésirable, tel que de l'eau, dans le réservoir 24 puisse être communiquée aux systèmes de contrôle du véhicule.

La présente invention n'est pas limitée par ce qui est en particulier illustré dans les dessins et par ce qui est en particulier décrit ci-dessus.

## Revendications

1. Capteur (2) capacitif de niveau (44) d'un liquide d'un réservoir (24), incluant
   un condensateur de mesure (4), destiné à être disposé dans le réservoir (24);
   un condensateur de référence (6), destiné à être disposé dans le réservoir (24) dans une partie basse de celui-ci;
   un condensateur étalon (8), de capacité supérieure à celle du condensateur de mesure (4);
   des moyens de contrôle (26), aptes à fournir un signal d'estimation (32) du niveau (44) du liquide;
   un amplificateur opérationnel (16);
   un condensateur d'intégration (18), connecté entre l'entrée inverseuse de l'amplificateur (16) et sa sortie; et
   un comparateur (20), destiné à comparer la tension de sortie (28) de l'amplificateur (16) à une tension de seuil (30) et à fournir un signal de comparaison (22) aux moyens de contrôle (26);
   **caractérisé en ce qu'**
   il inclut en outre un condensateur étalon complémentaire (10), de capacité supérieure à celle du condensateur de référence (6) et différente de celle du condensateur étalon (8); **en ce que**
   les moyens de contrôle (26) sont destinés à mettre en oeuvre les étapes suivantes, sur des périodes d'accumulation successives et pour un condensateur cible et un condensateur de décharge donnés à chaque période:

   une première étape (34) de chargement du condensateur cible par application d'une tension donnée à ses bornes;
   une deuxième étape (36) de transfert de la charge du condensateur cible vers le condensateur d'intégration (18);
   une troisième étape (38) de décision, consistant à passer une quatrième étape (40) si le signal de comparaison (22) est négatif;
   la quatrième étape (40) de décharge d'une partie de la charge du condensateur d'intégration (18) dans le condensateur de décharge et ensuite de décharge complète du condensateur de décharge; et
   une cinquième étape (42) de retour à la première étape (34); et **en ce que**
   les condensateurs cible et de décharge donnés à chaque période sont respectivement pris parmi un groupe de paires de condensateurs, incluant
   le condensateur de mesure (4) et le condensateur étalon (8), et
   le condensateur de référence (6) et le condensateur étalon complémentaire (10).

2. Capteur (2) selon la revendication 2, dans lequel le condensateur étalon complémentaire (10) a une capacité inférieure à celle du condensateur étalon (8).

3. Capteur (2) selon la revendication 1 ou 2,
   incluant en outre un premier condensateur de compensation (12), dont les caractéristiques évoluent en fonction de la température substantiellement de la même manière que des matériaux du support des condensateurs de mesure (4) et de référence (6); et
   dans lequel le groupe de paires de condensateurs inclut en outre
   le premier condensateur de compensation (12) et un premier condensateur de décharge associé.

4. Capteur (2) selon la revendication 3, dans lequel le premier condensateur de décharge associé est le condensateur étalon complémentaire (10).

5. Capteur (2) selon l'une quelconque des revendications précédentes,
   incluant en outre un deuxième condensateur de compensation (14), dont les caractéristiques évoluent en fonction de la température substantiellement de la même manière respectivement que des matériaux des couches protectrices des condensateurs de mesure (4) et de référence (6);
   et dans lequel le groupe de paires de condensateurs inclut en outre
   le deuxième condensateur de compensation (12) et un deuxième condensateur de décharge associé.

**6.** Capteur (2) selon la revendication 5, dans lequel le deuxième condensateur de décharge associé est le condensateur étalon complémentaire (10).

**7.** Capteur (2) selon l'une quelconque des revendications précédentes, dans lequel les moyens de contrôle sont destinés à sélectionner le condensateur étalon (8), de manière automatique, parmi différents condensateurs, préalablement à la période d'accumulation associée au condensateur de mesure (4), en fonction d'une mesure initiale de la constante diélectrique du liquide, effectuée sur le condensateur de référence (6).

**8.** Capteur (2) selon l'une quelconque des revendications précédentes, dans lequel les moyens de contrôle (26) sont réalisés sous la forme d'un circuit électronique disposé à l'intérieur du réservoir (24).

**9.** Méthode d'estimation du niveau (44) d'un liquide dans un réservoir (24) par mesure capacitive, incluant la mise en oeuvre des étapes suivantes, sur des périodes d'accumulation successives et pour un condensateur cible et un condensateur de décharge donnés à chaque étape :

une première étape (34) de chargement du condensateur cible par application d'une tension donnée à ses bornes;
une deuxième étape (36) de transfert de la charge du condensateur cible vers un condensateur d'intégration (18), connecté entre l'entrée inverseuse d'un amplificateur opérationnel (16) et sa sortie;
une troisième étape (38) de décision, consistant à passer une quatrième étape (40) si un signal de comparaison (22) est négatif, le signal de comparaison (22) étant fourni par un comparateur (20), destiné à comparer la tension de sortie (28) de l'amplificateur (16) à une tension de seuil (22);
la quatrième étape (40) de décharge d'une partie de la charge du condensateur d'intégration (18) dans le condensateur de décharge et ensuite de décharge complète du condensateur de décharge; et
une cinquième étape (42) de retour à la première étape (34);
les condensateurs cible et de décharge donnés à chaque période étant respectivement pris parmi un groupe de paires de condensateurs, incluant
un condensateur de mesure (4), destiné à être disposé dans le réservoir (24), et un condensateur étalon (8), de capacité supérieure à celle du condensateur de mesure (4), et
un condensateur de référence (6), destiné à être disposé dans le réservoir (24) dans une partie basse de celui-ci, et le condensateur étalon complémentaire (10), de capacité supérieure à celle du condensateur de référence (6) et différente de celle du condensateur étalon (8).

**10.** Méthode selon la revendication 9, dans laquelle, lorsqu'un niveau (44) atypique est estimé, un signal d'alerte est fourni.

**11.** Utilisation d'un capteur (2) selon l'une quelconque des revendications 1 à 8, dans un réservoir (24).

**Patentansprüche**

**1.** Kapazitiver Geber (2) für den Füllstand (44) einer Flüssigkeit in einem Behälter (24), der Folgendes aufweist:

einen Messkondensator (4), der dazu bestimmt ist, in dem Behälter (24) angeordnet zu werden;
einen Referenzkondensator (6), der dazu bestimmt ist, in dem Behälter (24) in einem unteren Teil davon angeordnet zu werden;
einen Normalkondensator (8) mit einer Kapazität, die höher ist als diejenige des Messkondensators (4);
Steuermittel (26), die geeignet sind, ein Schätzsignal (32) des Füllstands (44) der Flüssigkeit zu liefern;
einen Operationsverstärker (16);
einen Integrationskondensator (18), der zwischen dem invertierenden Eingang des Verstärkers (16) und seinem Ausgang geschaltet ist; und
einen Komparator (20), der dazu bestimmt ist, die Ausgangsspannung (28) des Verstärkers (16) mit einer Schwellenspannung (30) zu vergleichen und ein Vergleichssignal (22) an die Steuermittel (26) zu liefern;

**dadurch gekennzeichnet, dass**:

er ferner einen ergänzenden Normalkondensator (10) aufweist, dessen Kapazität höher ist als diejenige des Referenzkondensators (6) und sich von derjenigen des Normalkondensators (8) unterscheidet; und dadurch, dass:

die Steuermittel (26) dazu bestimmt sind, auf aufeinanderfolgenden Akkumulierungsperioden und für einen gegebenen Zielkondensator und einen gegebenen Entladungskondensator in jeder Periode die folgenden Schritte durchzuführen:

einen ersten Schritt (34) des Ladens des Zielkondensators durch Anlegen einer gegebenen Spannung an seine Anschlüsse;

einen zweiten Schritt (36) des Transfers der Ladung des Zielkondensators zu dem Integrationskondensator (18);

einen dritten Schritt (38) der Entscheidung, die im Überspringen eines vierten Schrittes (40) besteht, wenn das Vergleichssignal (22) negativ ist;

den vierten Schritt (40) des Entladens eines Teils der Ladung des Integrationskondensators (18) in den Entladungskondensator und des anschließenden vollständigen Entladens des Entladungskondensators; und

einen fünften Schritt (42) der Rückkehr zum ersten Schritt (34); und dadurch, dass:

die gegebenen Ziel- und Entladungskondensatoren in jeder Periode jeweils aus einer Gruppe von Kondensatorpaaren ausgewählt sind, aufweisend:

den Messkondensator (4) und den Normalkondensator (8), und
den Referenzkondensator (6) und den ergänzenden Normalkondensator (10).

2. Geber (2) nach Anspruch 1, wobei der ergänzende Normalkondensator (10) eine Kapazität aufweist, die niedriger ist als diejenige des Normalkondensators (8).

3. Geber (2) nach Anspruch 1 oder 2,
der ferner einen ersten Kompensationskondensator (12), dessen Eigenschaften sich in Abhängigkeit von der Temperatur im Wesentlichen auf dieselbe Weise verändern wie Trägermaterialien des Mess- (4) und des Referenzkondensators (6); und
wobei die Gruppe von Kondensatorpaaren ferner aufweist:

den ersten Kompensationskondensator (12) und einen zugehörigen ersten Entladungskondensator.

4. Geber (2) nach Anspruch 3, wobei der erste zugehörige Entladungskondensator der ergänzende Normalkondensator (10) ist.

5. Geber (2) nach einem der vorhergehenden Ansprüche,
der ferner einen zweiten Kompensationskompensator (14) aufweist, dessen Eigenschaften sich in Abhängigkeit von der Temperatur im Wesentlichen auf dieselbe Weise verändern wie Materialien der Schutzschichten des Mess- (4) beziehungsweise Referenzkondensators (6);
und wobei die Gruppe von Kondensatorpaaren ferner aufweist:

den zweiten Kompensationskondensator (12) und einen zugehörigen zweiten Entladungskondensator.

6. Geber (2) nach Anspruch 5, wobei der zugehörige zweite Entladungskondensator der ergänzende Normalkondensator (10) ist.

7. Geber (2) nach einem der vorhergehenden Ansprüche, wobei die Steuermittel dazu bestimmt sind, den Normalkondensator (8) automatisch unter verschiedenen Kondensatoren vor der Akkumulierungsperiode, die dem Messkondensator (4) zugeordnet ist, in Abhängigkeit von einer Anfangsmessung der Dielektrizitätskonstante der Flüssigkeit auszuwählen, die auf dem Referenzkondensator (6) durchgeführt wurde.

8. Geber (2) nach einem der vorhergehenden Ansprüche, wobei die Steuermittel (26) in der Form einer elektronischen Schaltung ausgeführt sind, die im Inneren des Behälters (24) angeordnet ist.

9. Verfahren zum Schätzen des Füllstands (44) einer Flüssigkeit in einem Behälter (24) durch kapazitive Messung, das die Durchführung der folgenden Schritte auf aufeinanderfolgenden Akkumulierungsperioden und für einen gegebenen Zielkondensator und einen gegebenen Entladungskondensator bei jedem Schritt umfasst:

einen ersten Schritt (34) des Ladens des Zielkondensators durch Anlegen einer gegebenen Spannung an seine Anschlussklemmen;

einen zweiten Schritt (36) des Transfers der Ladung des Zielkondensators zu einem Integrationskondensators (18), der zwischen dem invertierenden Eingang eines Operationsverstärkers (16) und seinem Ausgang geschaltet ist;

einen dritten Schritt (38) des Entscheidens, der darin besteht, einen vierten Schritt (40) zu überspringen, wenn ein Vergleichssignal (22) negativ ist, wobei das Vergleichssignal (22) durch einen Komparator (20) geliefert wird, der dazu bestimmt ist, die Ausgangsspannung (28) des Verstärkers (16) mit einer Schwellenspannung (22) zu vergleichen;

den vierten Schritt (40) des Entladens eines Teils der Ladung des Integrationskondensators (18) in den Entladungskondensator und des anschließenden vollständigen Entladens des Entladungskondensators; und

einen fünften Schritt (42) der Rückkehr zum ersten Schritt (34);

wobei der gegebene Zielkondensator und der gegebene Entladungskondensator in jeder Periode jeweils das einer Gruppe von Kondensatorpaaren ausgewählt sind, aufweisend:

einen Messkondensator (4), der dazu bestimmt ist, in dem Behälter (24) angeordnet zu werden, und einen Normalkondensator (8), dessen Kapazität höher ist als diejenige des Messkondensators (4), und

einen Referenzkondensator (6), der dazu bestimmt ist, in dem Behälter (24) in einem unteren Teil davon angeordnet zu werden, und den ergänzenden Normalkondensator (10), dessen Kapazität höher ist als diejenige des Referenzkondensators (6) und sich von derjenigen des Normalkondensators (8) unterscheidet.

10. Verfahren nach Anspruch 9, wobei ein Alarmsignal geliefert wird, wenn ein atypischer Füllstand (44) geschätzt wird.

11. Verwendung eines Gebers (2) nach einem der Ansprüche 1 bis 8 in einem Behälter (24).

**Claims**

1. Capacitive sensor (2) for detecting the level (44) of a liquid in a tank (24), including:

· a measurement capacitor (4) intended to be placed in the tank (24);
· a reference capacitor (6) intended to be placed in the tank (24) in a bottom part of the latter;
· a calibration capacitor (8), having a capacitance higher than that of the measurement capacitor (4);
· control means (26) capable of delivering an estimation signal (32) corresponding to the level (44) of the liquid;
· an operational amplifier (16);
· an integrating capacitor (18) connected between the inverting input of the amplifier (16) and its output; and
· a comparator (20) intended for comparing the output voltage (28) of the amplifier (16) with a threshold voltage (30) and to deliver a comparison signal (22) to the control means (26);

**characterized in that** it further includes a complementary calibration capacitor (10) having a capacitance higher than that of the reference capacitor (6) and different from that of the calibration capacitor (8);

**in that** the control means (26) are intended to implement, over successive accumulation periods and for a target capacitor and a discharge capacitor that are given for each period, the following steps:

· a first step (34), for charging the target capacitor by applying a given voltage to its terminals;
· a second step (36), for transferring the charge from the target capacitor to the integrating capacitor (18);
· a third step (38), for deciding to skip the fourth step (40) if the comparison signal (22) is negative;
· a fourth step (40), for discharging some of the charge of the integrating capacitor (18) into the discharge capacitor and then for completely discharging the discharge capacitor; and
· a fifth step (42), for returning to the first step (34); and

**in that** the target and discharge capacitors given at each period are taken respectively from a group of pairs of capacitors, including:

· the measurement capacitor (4) and the calibration capacitor (8); and

· the reference capacitor (6) and the complementary calibration capacitor (10).

2. Sensor (2) according to claim 1, in which the complementary calibration capacitor (10) has a capacitance lower than that of the calibration capacitor (8).

3. Sensor (2) according to claim 1 or claim 2, which further includes a first compensating capacitor (12), the characteristics of which vary with temperature substantially in the same way as the materials of the support for the measurement (4) and reference (6) capacitors; and in which the group of pairs of capacitors further includes the first compensating capacitor (12) and an associated first discharge capacitor.

4. Sensor (2) according to claim 3, in which the associated first discharge capacitor is the complementary calibration capacitor (10).

5. Sensor (2) according to any one of the preceding claims, which further includes a second compensating capacitor (14), the characteristics of which vary with temperature substantially in the same manner as the materials of the protective layers of the measurement (4) and reference (6) capacitors, respectively, and in which the group of pairs of capacitors further includes the second compensating capacitor (14) and an associated second discharge capacitor.

6. Sensor (2) according to claim 5, in which the associated second discharge capacitor is the complementary calibration capacitor (10).

7. Sensor (2) according to any one of the preceding claims, in which the control means are intended to select the calibration capacitor (8), automatically, from among various capacitors, prior to the accumulation period associated with the measurement capacitor (4) according to an initial measurement of the dielectric constant of the liquid made on the reference capacitor (6).

8. Sensor (2) according to any one of the preceding claims, in which the control means (26) are produced in the form of an electronic circuit placed inside the tank (24).

9. Method of estimating the level (44) of a liquid in a tank (24) by a capacitive measurement, which includes the implementation, over successive accumulation periods and for a target capacitor and a discharge capacitor that are given for each step, the following steps:

· a first step (34), for charging the target capacitor by applying a given voltage to its terminals;
· a second step (36), for transferring the charge from the target capacitor to an integrating capacitor (18), connected between the inverting input of an operational amplifier (16) and its output;
· a third step (38), for deciding to skip the fourth step (40) if a comparison signal (22) is negative, the comparison signal (22) being delivered by a comparator (20) intended to compare the output voltage (28) of the amplifier (16) with a threshold voltage (30);
· a fourth step (40), for discharging some of the charge of the integrating capacitor (18) into the discharge capacitor and then for completely discharging the discharge capacitor; and
· a fifth step (42), for returning to the first step (34) ;

the target and discharge capacitors given at each period being taken respectively from a group of pairs of capacitors, including:

· a measurement capacitor (4) intended to be placed in the tank (24), and a calibration capacitor (8) having a capacitance higher than that of the measurement capacitor (4); and
· a reference capacitor (6) intended to be placed in the tank (24) in a bottom part of the latter, and the complementary calibration capacitor (10) having a capacitance higher than that of the reference capacitor (6) and different from that of the calibration capacitor (8).

10. Method according to claim 9, in which a warning signal is delivered when an atypical level (44) is estimated.

11. Use of a sensor (2) according to any one of claims 1 to 8 in a tank (24).

Fig. 1

EP 1 831 652 B1

Fig. 2

EP 1 831 652 B1

Fig. 3

EP 1 831 652 B1

Fig. 4

Fig. 5

Fig. 6

EP 1 831 652 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2795816 A1
- WO 0179789 A2